# EUROPÄISCHE PATENTSCHRIFT

(11) **EP 2 332 810 B1**
(45) Veröffentlichungstag und Bekanntmachung des Hinweises auf die Patenterteilung: **29.07.2015**
(21) Anmeldenummer: 10013840.3
(22) Anmeldetag: 21.10.2010
(51) Int. Cl.: B62D 25/04, B62D 25/02, B62D 29/00

(54) **Karosserie eines Kraftfahrzeugs**
Body of a motor vehicle
Carrosserie d'un véhicule automobile

(30) Priorität: 26.11.2009 DE 102009055696
(43) Veröffentlichungstag der Anmeldung: 15.06.2011
(73) Patentinhaber: Audi AG, 85045 Ingolstadt (DE)
(72) Erfinder: Münnich, Maik, 74196 Neuenstadt (DE); Kestler, Axel, 74172 Neckarsulm (DE)
(74) Vertreter: Patzelt, Heike Anna Maria

(56) Entgegenhaltungen:
- EP-A2- 0 146 716
- WO-A1-2005/056369
- DE-A1- 10 248 661
- DE-A1- 10 337 709
- DE-A1- 19 648 495

## Beschreibung

Die Erfindung betrifft eine Karosserie eines Kraftfahrzeugs mit einer an einen Längsträger angebundenen Fahrzeugsäule, wobei der Längsträger aus einem Leichtmetall gebildet ist.

Leichtmetall für Karosseriebauteile wird gemäß dem Stand der Technik eingesetzt, da sich dies vorteilhaft auf das Gewicht des Kraftfahrzeugs auswirkt, und die Gewichtsreduzierung mit einem geringeren Kraftstoffverbrauch des Kraftfahrzeugs einhergeht.

Die DE 102 48 661 A1 beschreibt eine Fahrgastzelle mit Längsträgern, welche Hohlprofil-Außenrohre und Hohlprofil-Innenrohre umfassen. Diese Hohlprofil-Rohre können aus Stahl oder Leichtbauwerkstoff bestehen. Mit den Längsträgern ist ein Flächenbauteil verbunden, wobei die Hohlprofilrohre das Flächenbauteil vollständig rundum einfassen. Das Flächenbauteil ist aus einem faserverstärkten Kunststoff gebildet. Die Hohlprofilrohre weisen topfförmige Aussparungen auf, in welche Säulenelemente eingesteckt werden.

Die WO 2005/056 369 A1 beschreibt eine Türsäule für eine Tragrahmenstruktur. Hierbei umfasst die Türsäule einen Säulenkörper, der im oberen Abschnitt aus Eisen bzw. aus einer Eisenlegierung hergestellt ist, und einen Säulenfuß, der in einem unteren Abschnitt der Türsäule aus einer Leichtmetalllegierung hergestellt ist.

Die DE 196 48 495 A1 beschreibt eine Karosserie mit einem Seitenschweller, welcher ein Hohlkammerprofil aufweist, das durch Strangpressen aus Leichtmetall gebildet ist. Auch die Profile einer Säule der Karosserie sind vorzugsweise aus Leichtmetall und als Strangpressprofile hergestellt.

Die DE 103 37 709 A1 beschreibt eine Karosserie eines Kraftfahrzeugs, bei welcher ein Seitenschweller in Schalenbauweise aus einem Innenblech und einem Außenblech zusammengesetzt ist, wobei als Werkstoff für das Blech ein Stahl zum Einsatz kommt. Eine B-Säule der Karosserie ist in einem Druckgussverfahren oder durch Strangpressen aus einer Aluminiumlegierung hergestellt. Dadurch ist ein geringeres Gewicht der Karosserie erreichbar als bei einer ebenfalls aus einem Stahl gebildeten Fahrzeugsäule. Im Anbindungsbereich der B-Säule an den Seitenschweller ist in dem Seitenschweller eine Vertiefung vorgesehen, in welcher ein Fuß der B-Säule formschlüssig aufgenommen ist. Zum Festlegen der B-Säule an dem Seitenschweller wird der Fuß in dem Anbindungsbereich mit dem Seitenschweller verklebt.

Als nachteilig bei einer derartigen Karosserie ist der Umstand anzusehen, dass die Verwendung von Stahl oder Blech als Werkstoff für den Seitenschweller zu einem unerwünscht hohen Gewicht des Kraftfahrzeugs führt.

Dem wird bei der gattungsgemäßen Karosserie durch Verwendung von Leichtmetall für den Längsträger begegnet. Die Verwendung von Leichtmetall geht jedoch auch mit vergleichsweise großen Kosten für die Karosseriebauteile einher.

Aufgabe der vorliegenden Erfindung ist es daher, eine Karosserie der eingangs genannten Art zu schaffen, mittels welcher sich eine im Hinblick auf das Gewicht oder die Kosten günstige Bauweise realisieren lässt.

Diese Aufgabe wird durch eine Karosserie mit den Merkmalen des Patentanspruchs 1 gelöst. Vorteilhafte Ausgestaltungen mit zweckmäßigen Weiterbildungen der Erfindung sind in den abhängigen Patentansprüchen angegeben.

Bei der erfindungsgemäßen Karosserie eines Kraftfahrzeugs bestehen die Fahrzeugsäule und der Längsträger zumindest in ihrem Anbindungsbereich aus voneinander verschiedenen Werkstoffen. Der von dem Leichtmetall verschiedene Werkstoff kann im Hinblick auf im Vergleich zu einer Fahrzeugsäule aus Leichtmetall verbesserten Crasheigenschaften und/oder einer erhöhten Steifigkeit und/oder erhöhten Festigkeit ausgewählt sein. So können die Vorteile, welche von einem Leichtmetall verschiedene Werkstoffe mit sich bringen, für die Fahrzeugsäule genutzt werden.

Würde hingegen eine wie der Längsträger aus Leichtmetall gefertigte Fahrzeugsäule zur Verbesserung ihrer Eigenschaften mit einem Verstärkungsteil versehen, welches aus dem von dem Leichtmetall verschiedenen Werkstoff besteht, so brächte dies ein zusätzliches Gewicht der Fahrzeugsäule mit sich. Durch unmittelbares Ausbilden der Fahrzeugsäule aus dem von dem Leichtmetall verschiedenen Werkstoff kann die Verbesserung jedoch ohne den Nachteil des zusätzlichen Gewichts erreicht werden.

Des Weiteren muss, um beispielsweise einer Fahrzeugsäule aus Leichtmetall eine gewünschte hohe Festigkeit zu verleihen, diese vergleichsweise dickwandig ausgebildet werden, was mit erhöhten Kosten einhergeht. Durch Verwendung des von dem Leichtmetall verschiedenen Werkstoffs für die Fahrzeugsäule kann nun die gleiche Festigkeit bei gleichem oder geringerem Gewicht erzielt werden, und dies bei verringerten Kosten.

Eine besonders belastbare Fahrzeugsäule ist realisierbar, wenn die Fahrzeugsäule nicht nur in ihrem Anbindungsbereich, sondern vollständig aus dem von dem Leichtmetall verschiedenen Werkstoff besteht. So kann nämlich eine Schwächung der Fahrzeugsäule vermieden werden, welche andernfalls mit dem Vorsehen eines Anbindeteils aus Leichtmetall an der Fahrzeugsäule einherginge.

Erfindungsgemäß sind die Fahrzeugsäule aus einem Stahl oder einem Faserverbundwerkstoff und der Längsträger aus einer Aluminiumlegierung gebildet. Durch die Verwendung von Stahl oder dem, insbesondere Karbonfasern aufweisenden, Faserverbundwerkstoff kann mit deutlich weniger Material die gleiche Festigkeit erreicht werden als bei der Verwendung von einer Aluminiumlegierung für die Fahrzeugsäule. Bei Verwendung des Faserverbundwerkstoffs ist darüber hinaus gegenüber der Aluminiumlegierung noch ein deutlicher Gewichtsvorteil erzielbar.

In einer vorteilhaften Ausgestaltung der Erfindung weist die Fahrzeugsäule eine höhere Steifigkeit und/oder Festigkeit auf als der Längsträger. Der Längsträger kann so bei einem Aufprall des Kraftfahrzeugs auf ein Hindernis Aufprallenergie durch Verformung abbauen, während die Fahrzeugsäule einer Verformung einen hohen Widerstand entgegensetzt und auf diese Weise eine Fahrgastzelle des Kraftfahrzeugs schützt. Unter Steifigkeit ist hierbei der von der Geometrie der Fahrzeugsäule und dem Werkstoff abhängige Widerstand gegenüber einer Verformung zu verstehen, während die Festigkeit als Werkstoffeigenschaft den Widerstand gegenüber einer plastischen Verformung angibt.

Die Fahrzeugsäule kann vorteilhaft in Schalenbauweise ausgebildet sein. Hierbei kann Eisen- oder Stahlblech zum Einsatz kommen. Eine derartige Fertigung eröffnet einen großen Spielraum für etwaige Versteifungen der Fahrzeugsäule.

Es können auch für den Längsträger Bleche aus einer Aluminiumlegierung zum Einsatz kommen, welche in einer Schalenbauweise den Längsträger bilden. Der Längsträger kann jedoch auch einfach und kostengünstig als stranggepresstes Profilteil ausgebildet sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: perspektivisch und ausschnittsweise eine Karosserie eines Kraftfahrzeugs, bei welcher eine B-Säule aus Stahl an einen Seitenschweller aus einer Aluminiumlegierung angebunden ist; und
- Fig. 2: ausschnittsweise die Fahrzeugsäule gemäß Fig. 1 in ihrem Anbindungsbereich an einen aus einer Aluminiumlegierung gebildeten Dachholm der Karosserie.

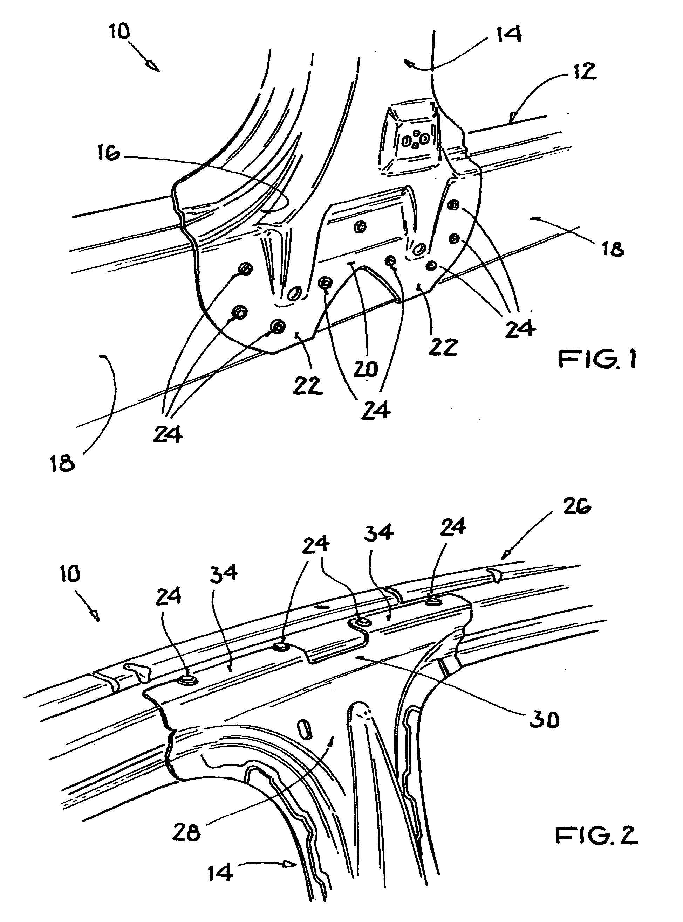

Von einer Karosserie 10 eines Kraftwagens ist in Fig. 1 ein Seitenschweller 12 gezeigt, welcher aus einer Aluminiumlegierung gebildet ist. An den Seitenschweller 12 ist eine B-Säule 14 aus Stahl angebunden.

Die aus Stahl gefertigte B-Säule verleiht dieser eine besonders hohe Steifigkeit und Festigkeit, wodurch diese einer, beispielsweise unfallbedingten, Verformung einen besonders großen Widerstand entgegenzusetzen vermag. Demgegenüber bringt die Verwendung der Aluminiumlegierung für den Seitenschweller 12 ein geringes Gewicht der Karosserie mit sich.

Ein Fußteil 16 der B-Säule 14 umgreift eine Außenwand 18 des Seitenschwellers 12 zu drei Seiten hin. Eine Frontplatte 20 des Fußteils 16 bildet hierbei zwei den Seitenschweller 12 unterseitig umgreifende Klauen 22 aus. In der Frontplatte 20 sind eine Mehrzahl von Schrauben 24 angeordnet, welche das Fußteil 16 der B-Säule 14 lagegesichert an den Seitenschweller 12 anbinden.

In anderen Ausführungsformen können anstelle der Schrauben 24 oder zusätzlich zu diesen Niete, insbesondere Stanzniete, Nägel oder dergleichen Verbindungselemente zum Einsatz kommen. Durch das Vorsehen solcher Verbindungselemente wird dem Umstand Rechnung getragen, dass die Verwendung unterschiedlicher Werkstoffe für die B-Säule 14 und den Seitenschweller 12 ein Verbinden durch ein aufschmelzendes Verfahren, etwa durch Schweißen, erschwert.

Die Schrauben 24 sind vorliegend als Flow-Drill-Schrauben (fließlochformende Schrauben) ausgebildet, bei welchen die Schraubbewegung zu einer Erhitzung des Materials führt, in welches die Schraube 24 eingebracht wird. Das erhitzte Material wird dann so in die Schraubrichtung verdrängt, dass eine über die ursprüngliche Materialstärke hinausgehende Einschraubtiefe erreichbar ist.

Zur Verbesserung der Anbindung der B-Säule 14 an den Seitenschweller 12 kann auf jeweilige Anlageflächen der B-Säule 14 an den Seitenschweller 12 vor dem Verschrauben ein Klebstoff aufgetragen werden.

Fig. 2 zeigt die Anbindung der B-Säule 14 an einen aus einer Aluminiumlegierung gebildeten Dachholm 26 der Karosserie 10. Ein Kopfteil 28 der B-Säule 14 umfasst hierbei eine vordere Seitenwand 30, welche mit einer Au-βenwand 32 des Dachholms 26 in Anlage ist. Von der Außenwand 30 des Kopfteils 28 stehen zwei Flansche 34 seitlich ab, welche oberseitig auf dem Dachholm 26 aufliegen. Durch jeden der Flansche 34 sind zwei Schrauben 24 hindurchgeführt. Die Schrauben 24 sorgen für die Verbindung der B-Säule 14 mit dem Dachholm 26 und sind ebenfalls als Flow-Drill-Schrauben ausgeführt.

Auch im Anbindungsbereich der B-Säule 14 an den Dachholm 26 kann eine Klebeverbindung für eine verbesserte Anbindung der B-Säule 14 an den Dachholm 26 sorgen.

## Patentansprüche

1. Karosserie eines Kraftfahrzeugs mit einer an einen Längsträger (12, 26) angebundenen Fahrzeugsäule (14), wobei der Längsträger (12, 26) aus einem Leichtmetall gebildet ist,
**dadurch gekennzeichnet, dass**
die Fahrzeugsäule (14) und der Längsträger (12, 26) zumindest in ihrem Anbindungsbereich aus voneinander verschiedenen Werkstoffen bestehen, wobei die Fahrzeugsäule (14) aus einem Stahl oder einem Faserverbundwerkstoff und der Längsträger (12, 26) aus einer Aluminiumlegierung gebildet sind.

2. Karosserie nach Anspruch 1,
**dadurch gekennzeichnet, dass**
die Fahrzeugsäule (14) eine höhere Steifigkeit und/oder Festigkeit aufweist als der Längsträger (12, 26).

3. Karosserie nach Anspruch 1 oder 2,
**gekennzeichnet durch**
eine Ausbildung der Fahrzeugsäule (14) in Schalenbauweise.

4. Karosserie nach einem der Ansprüche 1 bis 3,
**dadurch gekennzeichnet, dass**
der Längsträger (12, 26) als stranggepresstes Profilteil ausgebildet ist.

5. Karosserie nach einem der Ansprüche 1 bis 4,
**dadurch gekennzeichnet, dass**
die Fahrzeugsäule (14) mittels wenigstens eines in die Fahrzeugsäule (14) und in den Längsträger (12, 26) eingebrachten Verbindungselements (24) an den Längsträger (12, 26) angebunden ist.

6. Karosserie nach einem der Ansprüche 1 bis 5,
**gekennzeichnet durch**
eine Klebeverbindung im Anbindungsbereich von Fahrzeugsäule (14) und Längsträger (12, 26).

7. Karosserie nach einem der Ansprüche 1 bis 6,
**gekennzeichnet durch**
einen Seitenschweller (12) als Längsträger, welcher über die Fahrzeugsäule (14) mit einem Dachholm (26) als weiterem Längsträger verbunden ist.

## Claims

1. Body of a motor vehicle with a vehicle pillar (14) connected to a longitudinal member (12, 26), where the longitudinal member (12, 26) is made of a light metal
**characterised in that**,
at least in area in which the two are connected, the vehicle (14) and longitudinal member (12, 26), are made of different material,
the vehicle column (14) consisting of steel or a fibre-reinforced plastic and the longitudinal member (12, 26), of an aluminium alloy.

2. Body as per claim 1,
**characterised in that**,
the vehicle column (14) has higher rigidity and/or firmness than the longitudinal member (12, 26) does.

3. Body as per claim 1 or 2,
**characterised in that**,
the vehicle column (14) has been formed in shell construction.

4. Body as per one of the claims from 1 to 3,
**characterised in that**,
the longitudinal member (12, 26) has an extruded shape.

5. Body as per one of the claims from 1 to 4,
**characterised in that**,
the vehicle column (14) is connected to the longitudinal member (12, 26) with the help of at least one connecting element (24) introduced to the vehicle column (14) and longitudinal member (12, 26).

6. Body as per one of the claims from 1 to 5,
**characterised in that**,
an adhesive connection in the connecting area of the vehicle column (14) and longitudinal member (12, 26).

7. Body as per one of the claims from 1 to 6,
**characterised in that**,
a side skirt (12) as a longitudinal member, which is connected via a vehicle column (14) with a roof pillar (26) as the continuing longitudinal member.

## Revendications

1. Carrosserie d'un véhicule automobile comprenant une colonne de véhicule (14) reliée à un longeron (12, 26), dans laquelle le longeron (12, 26) est formé d'un métal léger,
**caractérisée en ce que** :
la colonne de véhicule (14) et le longeron (12, 26) sont constitués, au moins dans leur zone de liaison, de matériaux différents l'un de l'autre, dans laquelle la colonne de véhicule (14) est formée d'acier ou d'un matériau composite fibreux et le longeron (12, 26) d'un alliage d'aluminium.

2. Carrosserie selon la revendication 1,
**caractérisée en ce que** :
la colonne de véhicule (14) présente une rigidité et/ou une solidité plus élevées que celles du longeron (12, 26).

3. Carrosserie selon la revendication 1 ou la carrosserie 2,
**caractérisée par** :
une conformation de la colonne de véhicule (14) en structure monocoque.

4. Carrosserie selon l'une quelconque des revendications 1 à 3,
**caractérisée en ce que** :
le longeron (12, 26) se présente sous la forme d'une pièce profilée extrudée.

5. Carrosserie selon l'une quelconque des revendications 1 à 4,
**caractérisée en ce que** :
la colonne de véhicule (14) est liée aux longerons (12, 26) au moyen d'au moins un élément de liaison (24) monté dans la colonne de véhicule (14) et dans les longerons (12, 26).

6. Carrosserie selon l'une quelconque des revendications 1 à 5,
**caractérisée par** :
un joint collé dans la zone de liaison de la colonne de véhicule (14) et des longerons (12, 26).

7. Carrosserie selon l'une quelconque des revendications 1 à 6,
**caractérisée par** :
un seuil de porte latéral (12) comme longeron, qui est relié via la colonne de véhicule (14) à un longeron de toit (26) comme autre longeron.
